# EUROPEAN PATENT APPLICATION

(11) **EP 3 418 863 A1**
(43) Date of publication of application: **26.12.2018**
(21) Application number: 18179193.0
(22) Date of filing: 22.06.2018
(51) Int. Cl.: G06F 3/01

(54) **HAPTIC DIMENSIONS IN A VARIABLE GAZE ORIENTATION VIRTUAL ENVIRONMENT**

(30) Priority: 22.06.2017 US 201715630236
(71) Applicant: Immersion Corporation, San Jose CA 95134 (US)
(72) Inventor: Rosso, Jared C., Santa Cruz, CA 95060 (US); Rihn, William S., San Jose, CA 95126 (US); Attari, Sanya, Fremont, CA 94539 (US)
(74) Representative: Latscha Schöllhorn Partner AG

(57) **Abstract**

A method and system of generating haptic effects using haptic dimensions in a virtual environment is presented. The method includes identifying a point of interest within a virtual environment and generating a plurality of haptic dimensions based on the point of interest. The haptic dimensions define a point of interest region. Additionally, a gaze orientation of a user is determined and based on that gaze orientation, an amount of the user's gaze that is directed to the point of interest region is determined. If the amount of the user's gaze directed to the point of interest region is below a threshold amount, a haptic effect is generated.

## Description

### FIELD

One embodiment is directed generally to a haptic system, and in particular, to the generation of haptic effects using haptic dimensions in a variable gaze orientation virtual environment.

### BACKGROUND INFORMATION

Haptics is a tactile and force feedback technology that takes advantage of the sense of touch of a user by applying haptic feedback effects (e.g., "haptic effects"), such as forces, vibrations, and motions, to the user. Devices, such as mobile devices, touchscreen devices, and personal computers, can be configured to generate haptic effects. In general, calls to embedded hardware capable of generating haptic effects (such as actuators) can be programmed within an operating system ("OS") of the device. These calls specify which haptic effect to play. For example, when a user interacts with the device using, for example, a button, touchscreen, lever, joystick, wheel, or some other control, the OS of the device can send a command through control circuitry to the embedded hardware. The embedded hardware then produces the appropriate haptic effect.

In a conventional virtual reality ("VR") or augmented reality ("AR"), environment, or in other applications such as a video or game, users may be presented with a view of a virtual environment. In some embodiments, the environment consists of a 360-degree view, typically when using a head mounted display. Further, a video or game has a particular area of interest that is most vital to the content or purpose of the video or game. In this situation, the user may be gazing (*i.e.,* pointing or viewing) at something other than the particular area of interest and thus miss intended content. Such a situation can also occur when using a computer, tablet or hand held device with a game or video where the user can change their gaze through the swiping of a finger or the use of a mouse or other pointing device.

### SUMMARY

In an embodiment of the present disclosure, a system and method of generating haptic dimensions in a variable gaze orientation virtual environment is presented. A variable gaze orientation environment is any game, video, or interactive system in which the user has some control of their view within the virtual environment. A virtual environment is meant to mean any type of reality, virtual reality, augmented reality or the like that can be displayed in a head mounted display, hand held device, smartphone, or other display device. The method includes identifying a point of interest within a virtual environment and generating a plurality of haptic dimensions based on the point of interest. The haptic dimensions define a point of interest region. Additionally, a gaze orientation of a user is determined and based on that gaze orientation, an amount of the user's gaze that is directed to the point of interest region is determined. If the amount of the user's gaze directed to the point of interest region is below a threshold amount, a haptic effect is generated to reorient the user's gaze to the main content in the virtual environment.

### BRIEF DESCRIPTION OF THE DRAWINGS

The accompanying drawings, which are incorporated herein and form part of the specification, illustrate the present invention and, together with the description, further serve to explain the principles of the present invention and to enable a person skilled in the relevant art(s) to make and use the present invention.

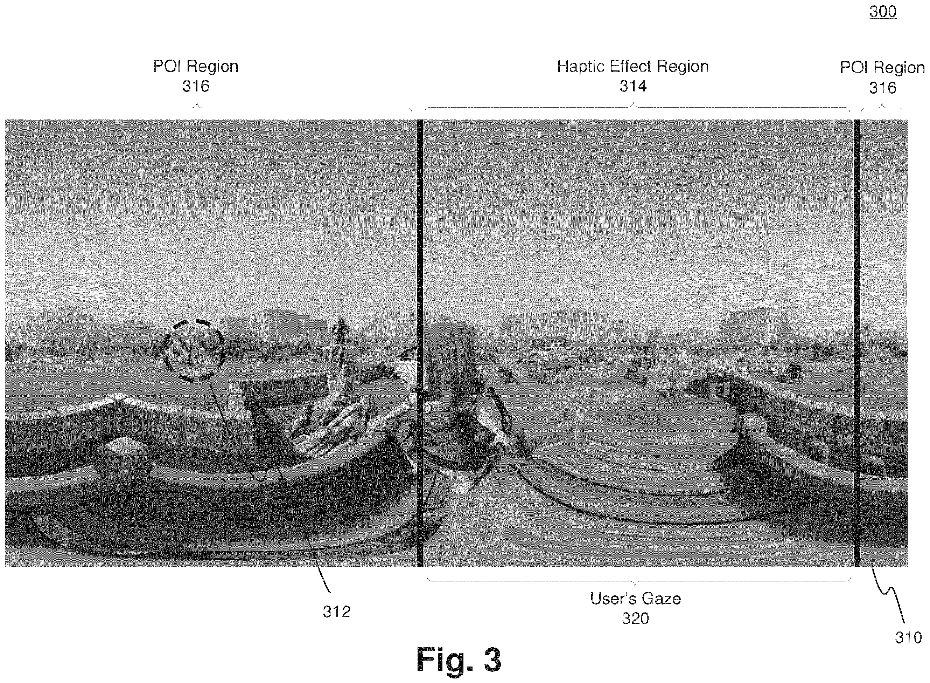

Additionally, the left most digit of a reference number identifies the drawing in which the reference number first appears (e.g., a reference number '310' indicates that the element so numbered is first labeled or first appears in FIG. 3). Additionally, elements which have the same reference number, followed by a different letter of the alphabet or other distinctive marking (*e.g.,* an apostrophe), indicate elements which are the same in structure, operation, or form but may be identified as being in different locations in space or recurring at different points in time.
Fig. 1 illustrates a block diagram of a haptically enabled virtual reality system, according to an embodiment of the present disclosure.
Fig. 2 is an illustration of a 360-degree virtual environment where a user's gaze is directed to a point of interest region, according to an embodiment of the present disclosure.
Fig. 3 is an illustration of a 360-degree virtual environment where a user's gaze is directed to a haptic effect region, according to an embodiment of the present disclosure.
Fig. 4 is a diagram of a haptic generation system using a haptic dimension generator, according to an embodiment.
Fig. 5 is a flow diagram of the functionality of the system of Fig. 1 utilizing haptic dimensions in to generate haptic effects, according to an embodiment of the present disclosure.

### DETAILED DESCRIPTION

One embodiment generates haptic dimensions that define an area in a virtual environment to assist users where to direct their gaze. Such direction guides the user to be able to view intended content, such as a point of interest. If the user's gaze is not directed at the point of interest, haptic effects are generated to guide the user to change his/her gaze orientation back to the point of interest. Haptic dimensions also are used to define an area in a game or video to assist users where to direct their gaze. A user's "gaze" is the view of the user within the game or video. Thus, for example, when using a hand held device, such as a smartphone, the user's gaze is what is seen on the display. Gaze can also include a component of depth where what is seen includes how close, or how far away a user is from a point of interest. For example, gaze could include rotational tracking or eye tracking in the horizontal axis (X-axis) and vertical axis (Y-axis) with depth tracking in the z-axis. Thus, haptic dimensions are applicable to virtual reality, augmented reality, and any other type of game or video is which the user can control movement or the direction of what can be seen.

While embodiments described herein are illustrative embodiments for particular applications, it should be understood that the invention is not limited thereto. Those skilled in the art with access to the teachings provided herein will recognize additional modifications, applications, and embodiments within the scope thereof and additional fields in which the invention would be of significant utility.

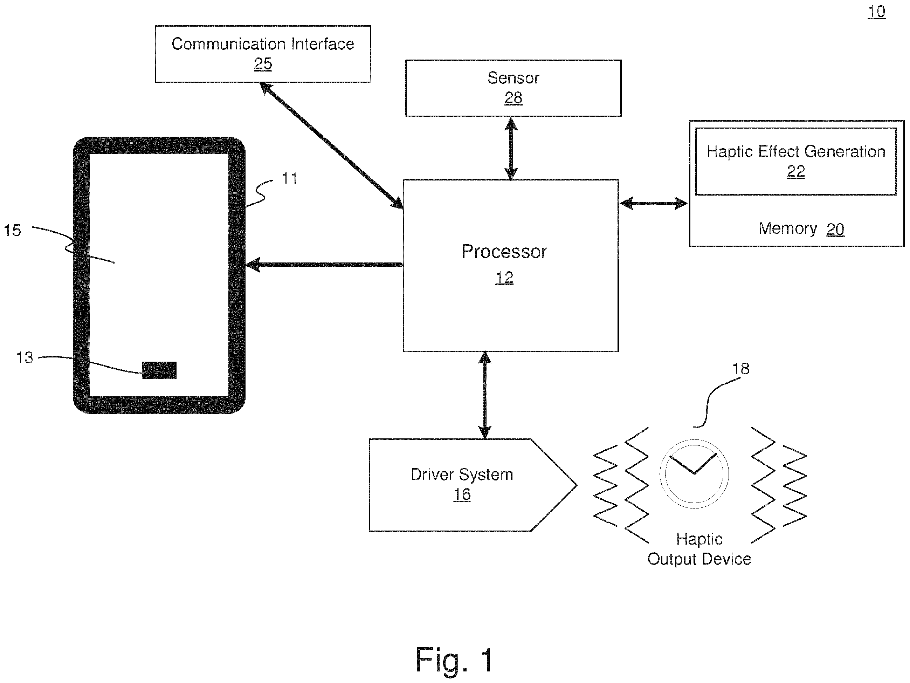

Fig. 1 is a block diagram of a haptically enabled system 10 that can implement an embodiment of the present invention. System 10 can include a smart device 11 (e.g., smart phone, tablet, smart watch, etc.) with mechanical or electrical selection buttons 13 and a touch sensitive screen 15. System 10 can also be any device held by the user, such as a gamepad, motion wand, head mounted display or device, etc.

Internal to system 10 is a haptic feedback system that generates haptic effects on system 10. The haptic feedback system includes a controller or processor 12. Coupled to processor 12 is a memory 20 and a driver system 16, which is coupled to a haptic output device 18. Processor 12 may be any type of general-purpose processor, or could be a processor specifically designed to provide haptic effects, such as an application-specific integrated circuit ("ASIC"). Processor 12 may be the same processor that operates the entire system 10, or may be a separate processor. Processor 12 can decide what haptic effects are to be played and the order in which the effects are played based on high-level parameters. In general, the high-level parameters that define a particular haptic effect include magnitude, frequency and duration. Low-level parameters such as streaming motor commands could also be used to determine a particular haptic effect. A haptic effect may be considered "dynamic" if it includes some variation of these parameters when the haptic effect is generated or a variation of these parameters based on a user's interaction.

Processor 12 outputs the control signals to driver system 16, which includes electronic components and circuitry used to supply haptic output device 18 with the required electrical current and voltage (*i.e.,* "motor signals") to cause the desired haptic effects to be generated. System 10 may include multiple haptic output devices 18, and each haptic output device 18 may include a driver system 16, all coupled to a processor 12. Memory 20 can be any type of transitory or non-transitory storage device or computer-readable medium, such as random access memory ("RAM") or read-only memory ("ROM"). Communication media may include computer readable instructions, data structures, program modules, or other data in a modulated data signal such as a carrier wave or other transport mechanism, and includes any information delivery media.

Memory 20 stores instructions executed by processor 12, such as operating system instructions. Among the instructions, memory 20 includes a haptic effect permissions module 22 which includes instructions that, when executed by processor 12, generate haptic effects based on permissions, as disclosed in more detail below. Memory 20 may also be located internal to processor 12, or any combination of internal and external memory.

Haptic output device 18 may be any type of device that generates haptic effects, and can be physically located in any area of system 10 to be able to create the desired haptic effect to the desired area of a user's body. In some embodiments, system 10 includes tens or even hundreds of haptic output devices 18, and the haptic output devices can be of different types to be able to generate haptic effects in generally every area of a user's body, and any type of haptic effect. Haptic output device 18 can be located in any portion of system 10, including any portion of smart device 11, or can be remotely coupled to any portion of system 10, such as a wearable device or head mounted display.

In one embodiment, haptic output device 18 is an actuator that generates vibrotactile haptic effects. Actuators used for this purpose may include an electromagnetic actuator such as an Eccentric Rotating Mass ("ERM") in which an eccentric mass is moved by a motor, a Linear Resonant Actuator ("LRA") in which a mass attached to a spring is driven back and forth, or a "smart material" such as piezoelectric, electroactive polymers ("EAP")or shape memory alloys. Haptic output device 18 may also be a device such as an electrostatic friction ("ESF") device or an ultrasonic surface friction ("USF") device, or a device that induces acoustic radiation pressure with an ultrasonic haptic transducer. Other devices can use a haptic substrate and a flexible or deformable surface, and devices can provide projected haptic output such as a puff of air using an air jet, etc. Haptic output device 18 can further be a device that provides thermal haptic effects (e.g., heats up or cools off).

System 10 further includes a sensor 28 coupled to processor 12. Sensor 28 can be used to detect any type of properties of the user of system 10 (e.g., a biomarker such as body temperature, heart rate, etc.), or of the context of the user or the current context (e.g., the location of the user, the temperature of the surroundings, etc.).

Sensor 28 can be configured to detect a form of energy, or other physical property, such as, but not limited to, sound, movement, acceleration, physiological signals, distance, flow, force/pressure/strain/bend, humidity, linear position, orientation/inclination, radio frequency, rotary position, rotary velocity, manipulation of a switch, temperature, vibration, or visible light intensity. Sensor 28 can further be configured to convert the detected energy, or other physical property, into an electrical signal, or any signal that represents virtual sensor information. Sensor 28 can be any device, such as, but not limited to, an accelerometer, an electrocardiogram, an electroencephalogram, an electromyograph, an electrooculogram, an electropalatograph, a galvanic skin response sensor, a capacitive sensor, a hall effect sensor, an infrared sensor, an ultrasonic sensor, a pressure sensor, a fiber optic sensor, a flexion sensor (or bend sensor), a force-sensitive resistor, a load cell, a LuSense CPS² 155, a miniature pressure transducer, a piezo sensor, a strain gage, a hygrometer, a linear position touch sensor, a linear potentiometer (or slider), a linear variable differential transformer, a compass, an inclinometer, a magnetic tag (or radio frequency identification tag), a rotary encoder, a rotary potentiometer, a gyroscope, an on-off switch, a temperature sensor (such as a thermometer, thermocouple, resistance temperature detector, thermistor, or temperature-transducing integrated circuit), a microphone, a photometer, an altimeter, a biological monitor, a camera, or a light-dependent resistor.

System 10 further includes a communication interface 25 that allows system 10 to communicate over the Internet/cloud (not shown). The internet/cloud can provide remote storage and processing for system 10 and allow system 10 to communicate with similar or different types of devices. Further, any of the processing functionality described herein can be performed by a processor/controller remote from system 10 and communicated via communication interface 25.

In an embodiment, a virtual environment can provide a user with a 360-degree virtual environment. With the use of a head mounted display ("HMD") the user can see in any direction. Where the user is looking is also referred to as the user's "gaze." While a 360-degree virtual environment presents an immersive experience to the user, the user can be distracted by other content or is just "exploring" and may miss the "main" content in a game or video. Typically, this is currently generally addressed with the display of a compass, or arrow, which informs the user they are navigating away from the main content of the experience or video and where to direct their gaze to return to the main content. In another embodiment, the user is presented with a virtual environment or game with less than a 360-degree view, such as with a smartphone in which the user's gaze, or view, could be controlled by the user through interaction with the device (*e.g.,* gestures on a touch screen, or through the use of keys or buttons). A 360-degree or less view is simply a design choice for a particular video or game.

In an embodiment, rather than using a compass or other display icon, haptic information is provided to the user where they should navigate their gaze to move toward a point of interest, especially, but not limited to a 360-degree environment, but equally applicable to devices such as a smartphone (*e.g.,* smart device 11). A haptics barrier is constructed where an area is defined around a point of interest that "fences" in the point of interest by haptics. If the user navigates outside of the point of interest region then a haptic effect is generated informing the user that they are navigating away from the main content.

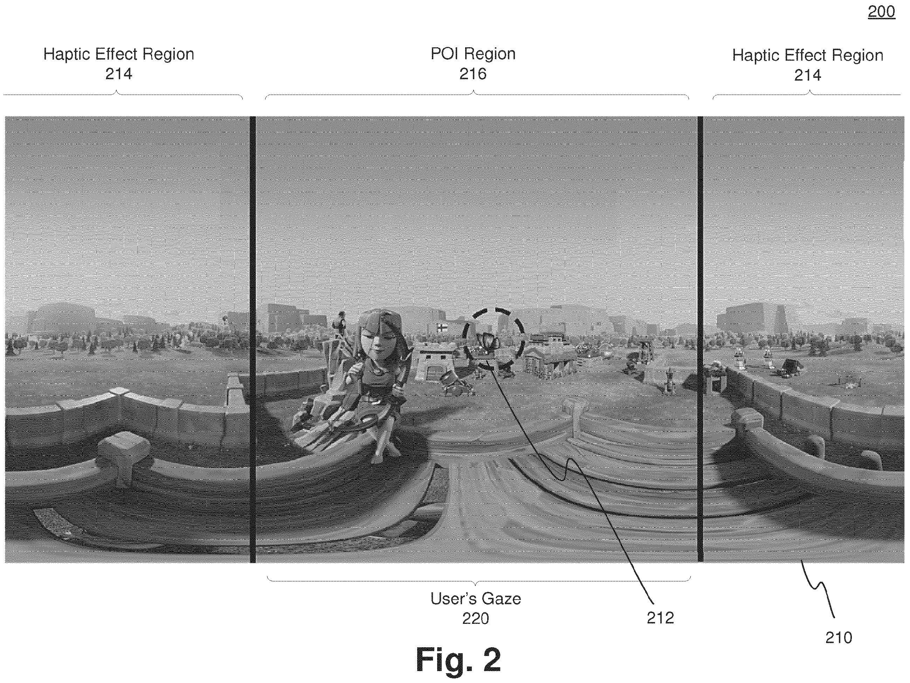

Fig. 2 is an illustration of a 360-degree virtual environment 200, according to an embodiment. Virtual environment 200 includes 360-degrees of content 210. Content 210 is divided into two regions, haptic effect region 214 and point of interest region ("POI region") 216. Haptic effect region 214 is a single contiguous region, but is shown in two sections due to the 360-degree viewing. Virtual environment 200 also includes a point of interest 212. Further, in virtual environment 200 the user's gaze 220 is directed to point of interest 212.

The POI region 216 is defined to be an area surrounding point of interest 212. The location and size of POI region 216 is also known as the haptic dimension. Further, the haptic dimension can also be referred to as a haptic barrier. If user's gaze 220 is directed entirely within POI region 216, and thus within the haptic dimensions (or haptic barrier), then there is no need to prompt or direct the user to change the orientation or direction of his/her gaze.

Some of the current 360-degree state-of-the-art video systems employ a visual compass. The visual compass points towards the main content and shows the user's relative gaze in relation to the main content. However, the use of a visual compass is typically not available or appropriately applied to 360-degree videos when wearing a head mounted display, or on a smart phone or other device.

In an embodiment, the haptic dimensions can be derived in existing 360-degree videos and games that use a visual compass. However, rather than displaying the visual compass that information will be used to generate an appropriate haptic effect - using haptics rather than a visual compass. Generally, the compass denotes the "front" or "default" state of a video that is the center point where the user is looking when the video is first started. In many 360 videos, the main storyline occurs in this original view, causing haptics to occur when straying far enough away to trigger effects.

Fig. 3 is an illustration of a 360-degree virtual environment 300, according to an embodiment. Virtual environment 300 includes 360-degrees of content 310. Content 310 is divided into two regions, haptic effect region 314 and point of interest region ("POI region") 316. POI region 316 is a single contiguous region, but is shown in two sections due to the 360-degree viewing. Virtual environment 300 also includes a point of interest 312.

In comparison to virtual environment 200, the point of interest 312 has moved to the left. When point of interest 312 moves, the haptic dimension travels with point of interest 312. If the user does not change his/her gaze orientation, as here in virtual environment 300, the user's gaze 320 is no longer directed to point of interest 312, nor is user's gaze 320 contained within POI region. Rather, as shown in virtual environment 300, user's gaze 320 is entirely directed to haptic effect region 314. In gazing at haptic effect region 314, the user no longer sees point of interest 312. Thus, in an embodiment, a haptic effect would be generated to inform the user to change the orientation of user's gaze, preferably to include point of interest 312.

In an embodiment, a threshold is determined whereby a haptic effect is generated when a certain portion of user's gaze 320 is directed outside of the haptic dimension, namely when some of user's gaze 320 is directed to haptic effect region 314. Virtual environment 300 depicts 100% of user's gaze 320 being directed to haptic effect region 314 with 0% directed to POI region 316. Thus, in this example the threshold would be 0%. However, any threshold value can be chosen. For example, a threshold level of 90% could be set whereby if user's gaze 320 directed to POI region 316 is less than 90% a haptic effect is generated informing the user to redirect his/her gaze towards point of interest 312 and POI region 316.

In another embodiment, the threshold can be expressed in other terms, rather than a percentage of gaze. For example, the threshold could be in terms of a number of degrees of displacement from point of interest 312, *e.g.,* 45° from point of interest in the horizontal plane, left or right, or in the vertical plane, above or below. In another embodiment, the threshold can be based on a distance from point of interest 312. Such a distance can again be in the horizontal or vertical planes, or if the user has the ability to "pan" in or out, when the user pans out from the point of interest 312 where the POI region becomes a smaller portion of the field of view. In addition, the threshold could be expressed in terms of the amount of the field of view, such as the user's gaze being 25% or more of the field of view away from the point of interest. Further, the values may be absolute values, such as a POI exists at 0 degrees and to play an effect if facing between 90 and 270 degrees. The values may also be a relative delta where the POI exists at 0 degrees and to play an effect if the user's gaze is equal to or greater than a change of 45 degrees. Further, rather than triggering an effect based on a threshold amount of direction, a POI haptic effect may be triggered after a certain period of time that the user is not gazing at the POI.

In an embodiment, haptics can be used to impart directional information to the user. For example, transitioning from virtual environment 200 to virtual environment 300 indicates point of interest 212/312 is moving to the left. In moving to the left, the haptic dimension travels with point of interest 212/312, where the haptic effect region 314 also moves as the haptic dimension travels. If the user does not change his/her gaze, the user's gaze will impact the haptic barrier or dimension from the right. Thus, in an embodiment, a haptic effect is generated on the right side of the user, on either a wearable device, a mobile device, or any other haptically enabled device. The same concept applies if the point of interest moves to the right where the user would encounter impacting the haptic effect region from the left, and consequently receive a haptic effect on the left side of the user. The corresponding information and haptic effect can also be generated where an upper or lower haptic dimension in encountered. Therefore, users can be guided to change their gaze from any direction, or combination of directions, e.g., lower and left, upper and right, etc., to reorient the user's gaze to the center, or main portion, of video or game content. Further, the type of generated haptic effects can be different where the type of haptic effect can indicate which haptic barrier, or barriers, are encountered.

In another embodiment, the opposite of the above approach can be used where rather than using haptics as a barrier that cannot be penetrated, the haptic effect signals where the user should be looking. In an embodiment, different haptic effects can be used where one type of haptic effect represents a barrier and another haptic effect represents which direction the POI is located. For example, vibrotactile effects would represent barriers whereas Miraisens style or force feedback technologies are used in an attempt to change the user's gaze. Miraisens is a three-dimensional gesture feedback technology produced by Miraisens, Inc. that can be used to produce a sense of force, pressure or tactile sensation.

Reference to Fig. 3 has illustrated the movement of point of interest 312 and the corresponding movement of POI region 316 and haptic effect region 314. A similar situation exits where the user's gaze moves, whether or not point of interest 312 moves. In this situation, a determination is made that the user's gaze is moving. For example, assume in virtual environment 300, rather than point of interest 312 moving to the left, that user's gaze 320 actually moved to the right. In this situation, user's gaze 320 is moving away from point of interest 312. Once a threshold amount of user's gaze 320 is not directed to POI region 316, a haptic effect would be generated in an attempt to reorient user's gaze 320. In addition to altering the user that their gaze is no longer focused on the main content, a parameter of the haptic effect can convey whether the user's gaze is moving in the correct direction. For example, as user's gaze 320 continues to move to the right - away from point of interest 312 - a parameter of the generated haptic effect can increase as the distance from user's gaze 320 to point of interest 312 increases. The parameter could be magnitude, frequency, duration, or any other combination of haptic effects. Thus, if the user reverses the movement of user's gaze 320 back to the left and decrease the distance between user's gaze 320 and point of interest 312 then the parameter of the generated haptic effect would decrease. In a similar example, given that this is 360 degree content, if the user continued to move their gaze to the right eventually the distance between user's gaze 320 and point of interest 312 would start to decrease, subsequently resulting in a decreasing of the parameter of the haptic effect.

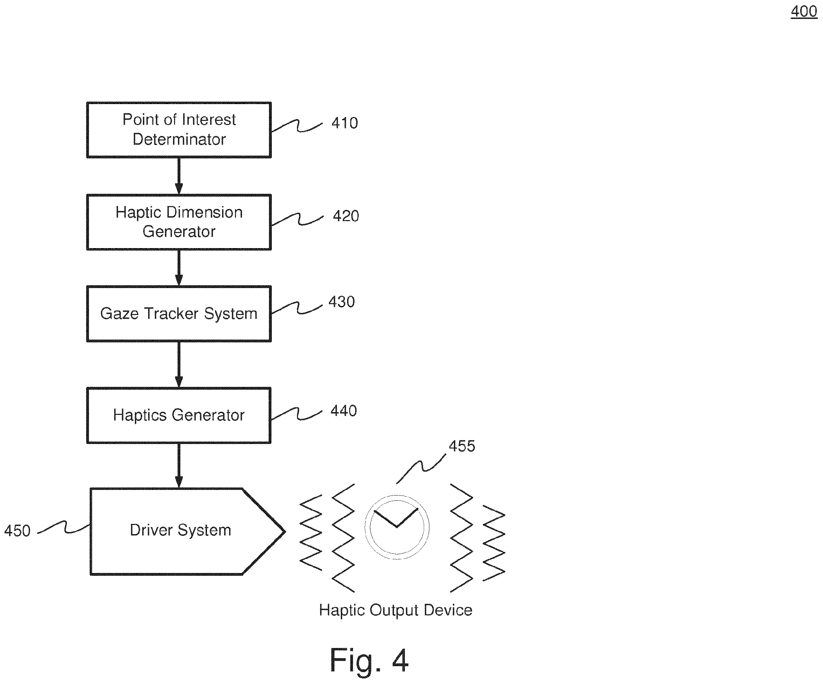

Fig. 4 is a diagram of a haptic generation system 400 utilizing a haptic dimension generator, according to an embodiment. System 400 includes a point of interest determinator 410, a haptic dimension generator 420, a gaze tracker system 430, a haptics generator 440, a driver system 450 and haptic output device 455.

Point of interest determinator 410 receives haptically enabled content. The haptically enabled content includes two-dimensional or 360 degree video content. Such content can include a haptically enabled game or video. A point of interest is identified, either from an accompanying haptic track or through the use of a video processing algorithm.

Once a point of interest is identified by point of interest determinator 410, haptic dimension generator 420 defines a set of dimensions that define a point of interest region surrounding the point of interest. For example, POI region 216 in Fig. 2 or POI region 316 in Fig. 3. As previously discussed, the haptic dimensions define where a POI region ends and a haptic effect region begins.

Gaze tracker system 430 determines an orientation of a user's gaze, such as user's gaze 220 in Fig. 2 and user's gaze 320 in Fig. 3. Gaze tracker system 430, by determining an orientation of the user's gaze, can determine how much of the user's gaze falls into the point of interest region.

Haptics generator 440 produces a haptic signal if the amount of the user's gaze determined by gaze tracker system 430 into the point of interest region is at or below a threshold amount.

Haptics generator 440 is also configured to determine the number, location and types of haptic output devices or actuators. The placement, type and number of devices or actuators determine the quality of localized haptics. The greater the number of devices, the better the sensation of localized haptics by the user. Haptic output devices can be located on the user, such as through the user of wearable technologies, embedded within a handheld controller, or integrated into objects such as a chair or other furniture. In addition, small numbers of actuators are capable of producing reasonable localized haptics.

Haptics generator 440 dynamically generates haptic effects commands for the haptic output devices based on the outputs of point of interest determinator 410, haptic dimension generator 420 and gaze tracker system 430. Haptics generator 440 generates effects based on the movement of a point of interest and/or the user's gaze. Haptics generator 440 analyzes the number and position of the available haptic output devices (e.g., actuators) to determine the proper type of dynamic localized haptic effect to be provided to each haptic output device. Further, haptic generator 440 can dynamically produce the localized haptic effects for each haptic output device in real time. For example, if the user's gaze is directed to a haptic effect region, e.g., haptic effect region 314 of Fig. 3, the localized haptic effect will be modified based on the changing movement of the point of interest or the user's gaze.

Driver system 450 receives haptic commands, or instructions, from haptic generator 440 and operates haptic output device 455 that produce the desired haptic effect. Driver system 450 also includes one or more drivers.

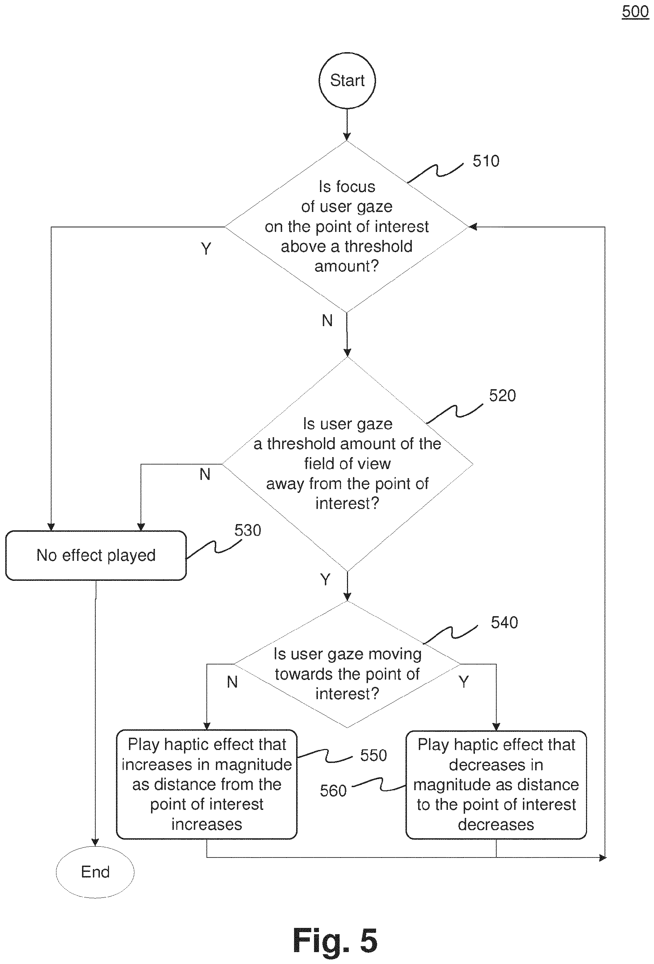

Fig. 5 is a flow diagram 500 with the functionality of system 10 of Fig. 1 utilizing haptic dimensions to generate haptic effects, according to an embodiment. In one embodiment, the functionality of the flow diagram of Fig. 5 is implemented by software stored in memory or other computer readable or tangible medium, and executed by a processor. In other embodiments, the functionality may be performed by hardware (e.g., through the use of an application specific integrated circuit ("ASIC"), a programmable gate array ("PGA"), a field programmable gate array ("FPGA"), etc.), or any combination of hardware and software.

Flow diagram 500 starts at 510 in which a determination is made as to whether the focus of a user's gaze on a point of interest is above a threshold amount. In an embodiment without eye tracking, focus is the determination of user gaze, e.g., what section of the video the user is viewing. In the case that the device has eye-tracking capability, focus may include the specific portion of the viewable (on-screen) content that the user sees. As discussed in Fig. 2 and Fig. 3, a point of interest is identified, e.g., point of interest 212 and 312. Once the point of interest is identified then a determination is made as whether the user's gaze is focused on the point of interest. For example, if the user's gaze is panned outward from the point of interest so much that the point of interest and corresponding POI region, e.g., POI region 216 and 316 become a small percentage of the overall field of view, then a determination can be made that the ratio of the POI region to the overall field of view is below a threshold amount and the method would continue to 520. On the other hand, if the ratio of the POI region to the overall field of view is above a threshold amount then the user's gaze is determined to be focused on the point of interest and no haptic effect need be generated at 530.

At 520, a determination is made whether the orientation of the user's gaze is sufficiently directed at the point of interest. As previously discussed in Fig. 2, user's gaze 220 is entirely directed at point of interest 212 and contained within POI region 216, thus resulting in no haptic effect being generated at 530. However, in Fig. 3, user's gaze 320 is entirely directed at haptic effect region 314, where no amount of the gaze is directed to the point of interest, and even if the threshold amount were 100%, 100% of the user's gaze would be directed away from the point of interest and a haptic effect would be triggered.

At 540, the determination has been made to generate a haptic effect as the amount of the user's gaze away from the point of interest is above a threshold amount. At 540, a determination is made as to whether the user's gaze is moving towards or away from the point of interest. If the user's gaze is moving away from the point of interest then at 550 a haptic effect is generated that increases in a parameter, e.g., magnitude, frequency or duration etc., as the distance from the point of interest increases. If the user's gaze is moving towards the point of interest, then at 560 a haptic effect is generated that decreases in a parameter, e.g., magnitude, frequency or duration etc., as the distance from the point of interest decreases.

The method is then circled back to 510 to determine if the user's gaze is still focused on the point of interest.

As discussed, embodiments have been disclosed that include identifying a point of interest in a virtual environment and generating multiple haptic dimensions that define a point of interest region. A gaze orientation of a user is determined and analyzed to determine an amount of the user's gaze that is directed to the point of interest region. If the amount of the user's gaze is below a threshold amount then a haptic effect is generated.

Several embodiments are specifically illustrated and/or described herein. However, it will be appreciated that modifications and variations of the disclosed embodiments are covered by the above teachings and within the purview of the appended claims without departing from the spirit and intended scope of the invention.

Additional embodiments are discussed below.

Embodiment 1 is a method of providing a haptic effect in a virtual environment, comprising:
- identifying a point of interest within the virtual environment;
- generating a plurality of haptic dimensions based on the point of interest, wherein the plurality of haptic dimensions defines a point of interest region;
- determining a gaze orientation;
- determining, based on the gaze orientation, an amount of gaze directed to the point of interest region; and
- generating a haptic effect if the amount of the gaze directed to the point of interest region is at or below a threshold amount.

Embodiment 2 is the method of embodiment 1, further comprising determining if the gaze orientation is moving towards or away from the point of interest region.

Embodiment 3 is the method of embodiment 2, wherein a parameter of the generated haptic effect decreases as a distance of the gaze orientation to the point of interest region decreases.

Embodiment 4 is the method of any of embodiment 2 or 3, wherein a parameter of the haptic effect increases as a distance of the gaze orientation from the point of interest region increases.

Embodiment 5 is the method of any of embodiments 1 to 4, wherein determining the gaze orientation comprises the use of a head mounted display or a display device.

Embodiment 6 is the method of any of embodiments 1 to 5, wherein the virtual environment comprises a 360-degree content.

Embodiment 7 is the method of any of embodiments 1 to 6, wherein the generated haptic effect comprises a plurality of haptic effects.

Embodiment 8 is the method of embodiment 7, wherein if the gaze orientation is directed right of the point of interest region, the haptic effect is generated at a first actuator, and wherein if the gaze orientation is directed left of the point of interest region, the haptic effect is generated at a second actuator.

Embodiment 9 is the method of embodiment 7 or 8, wherein if the gaze orientation is directed above the point of interest region, the haptic effect is generated at a third actuator, and wherein if the gaze orientation is directed below the point of interest region, the haptic effect is generated at a fourth actuator.

Embodiment 10 is a computer readable medium having instructions stored thereon that, when executed by a processor, cause the processor to produce a haptic effect, the producing comprising:
- identifying a point of interest within a virtual environment;
- generating a plurality of haptic dimensions based on the point of interest, wherein the plurality of haptic dimensions defines a point of interest region;
- determining a gaze orientation; and
- determining, based on the gaze orientation, an amount of gaze directed to the point of interest region, wherein if the amount of the gaze directed to the point of interest region is at or below a threshold amount, a haptic effect is generated.

Embodiment 11 is the computer readable medium of embodiment 10, further comprising determining if the gaze orientation is moving towards or away from the point of interest region.

Embodiment 12 is the computer readable medium of embodiment 11, wherein a parameter of the generated haptic effect decreases as a distance of the gaze orientation to the point of interest region decreases.

Embodiment 13 is the computer readable medium of embodiment 11 or 12, wherein a parameter of the haptic effect increases as a distance of the gaze orientation from the point of interest region increases.

Embodiment 14 is the computer readable medium of any of embodiments 11 to 13, wherein determining the gaze orientation comprises the use of a head mounted display or a display device.

Embodiment 15 is the computer readable medium of any of embodiments 11 to 14, wherein the virtual environment comprises a 360-degree content.

Embodiment 16 is the computer readable medium of any of embodiments 11 to 15, wherein the generated haptic effect comprises a plurality of haptic effects.

Embodiment 17 is a system for generating a haptic effect using haptic dimensions, comprising:
- a point of interest determinator configured to identify a point of interest within a virtual environment;
- a haptic dimension generator configured to generate a plurality of haptic dimensions based on the point of interest, wherein the plurality of haptic dimensions defies a point of interest region;
- a gaze tracker system configured to determine a gaze orientation and based on the gaze orientation, determine an amount of gaze directed to the point of interest region; and
- a haptics generator configured to generate a haptic effect if the amount of the gaze directed to the point of interest region is at or below a threshold amount.

Embodiment 18 is the system of embodiment 17, wherein the gaze tracker system is further configured to determine if the gaze orientation is moving towards or away from the point of interest region.

Embodiment 19 is the system of embodiment 18, wherein the haptic generator is configured to decrease a parameter of the generated haptic effect as a distance of the gaze orientation to the point of interest region decreases.

Embodiment 20 is the system of embodiment 17 or 18, wherein the haptic generator is configured to increase a parameter of the generated haptic effect as a distance of the gaze orientation to the point of interest region increases.

## Claims

1. A method of providing a haptic effect in a virtual environment, comprising:
identifying a point of interest within the virtual environment;
generating a plurality of haptic dimensions based on the point of interest, wherein the plurality of haptic dimensions defines a point of interest region;
determining a gaze orientation;
determining, based on the gaze orientation, an amount of gaze directed to the point of interest region; and
generating a haptic effect if the amount of the gaze directed to the point of interest region is at or below a threshold amount.

2. The method according to claim 1, further comprising:
determining if the gaze orientation is moving towards or away from the point of interest region.

3. The method according to claims 1 or 2, wherein a parameter of the generated haptic effect decreases as a distance of the gaze orientation to the point of interest region decreases.

4. The method according to any one of the preceding claims, wherein a parameter of the generated haptic effect increases as a distance of the gaze orientation from the point of interest region increases.

5. The method according to any one of the preceding claims, wherein determining the gaze orientation comprises the use of a head mounted display or a display device.

6. The method according to any one of the preceding claims, wherein the virtual environment comprises a 360-degree content.

7. The method according to any one of the preceding claims, wherein the generated haptic effect comprises a plurality of haptic effects.

8. The method according to any one of the preceding claims, wherein if the gaze orientation is directed right of the point of interest region, the haptic effect is generated at a first actuator, and wherein if the gaze orientation is directed left of the point of interest region, the haptic effect is generated at a second actuator.

9. The method according to any one of the preceding claims, wherein if the gaze orientation is directed above the point of interest region, the haptic effect is generated at a third actuator, and wherein if the gaze orientation is directed below the point of interest region, the haptic effect is generated at a fourth actuator.

10. A computer readable medium having instructions stored thereon that, when executed by a processor, cause the processor to produce a haptic effect, the producing comprising the method according to any of claims 1-9.

11. A system for generating a haptic effect using haptic dimensions, comprising:
a point of interest determinator configured to identify a point of interest within a virtual environment;
a haptic dimension generator configured to generate a plurality of haptic dimensions based on the point of interest, wherein the plurality of haptic dimensions defies a point of interest region;
a gaze tracker system configured to determine a gaze orientation and based on the gaze orientation, determine an amount of gaze directed to the point of interest region; and
a haptics generator configured to generate a haptic effect if the amount of the gaze directed to the point of interest region is at or below a threshold amount.

12. The system of claim 11, wherein the gaze tracker system is further configured to determine if the gaze orientation is moving towards or away from the point of interest region.

13. The system of claim 12, wherein the haptic generator is configured to decrease a parameter of the generated haptic effect as a distance of the gaze orientation to the point of interest region decreases.

14. The system of claim 12, wherein the haptic generator is configured to increase a parameter of the generated haptic effect as a distance of the gaze orientation to the point of interest region increases.

15. The system of any of claims 11 to 14, wherein the gaze tracker system is further configured to determine the gaze orientation using a head mounted display or a display device.
